# EUROPEAN PATENT APPLICATION

(11) **EP 3 082 096 A1**
(43) Date of publication of application: **19.10.2016**
(21) Application number: 14870498.4
(22) Date of filing: 18.09.2014
(51) Int. Cl.: G06Q 50/06, G06Q 50/10, H02J 3/00

(54) **DEMAND PREDICTION DEVICE AND PROGRAM**

(30) Priority: 10.12.2013 JP 2013255395
(71) Applicant: Panasonic Intellectual Property Management Co., Ltd., Osaka-shi, Osaka 570-6207 (JP)
(72) Inventor: SHIMIZU, Noriyoshi, Osaka-shi, Osaka 570-6207 (JP)
(74) Representative: Appelt, Christian W.
(86) International application number: PCT/JP2014/004800
(87) International publication number: WO 2015/087470

(57) **Abstract**

An object is to predict an amount of electric power that is demanded in a future prediction period with good accuracy. A demand prediction system (10) includes a receiver (11), a memory (12), an extractor (13), a model generator (14) and a predictor (15). The extractor (13) is configured to extract consumption periods for branch circuits (22), during each of which power is consumed once. The model generator (14) is configured to generate models. Each model includes: an order in which the consumption periods have occurred; amounts of electric power respectively consumed during the consumption periods; and start time points and duration times, of the consumption periods. The model generator (14) is further configured to calculate transition probabilities between the models. The predictor (15) configured to predict, as a prediction result, an amount of electric power that is demanded in a prediction period defined as a time period after a determination time point, based on: a certain model in past before the determination time point, of the models; and a transition probability corresponding to the certain model.

## Description

### TECHNICAL FIELD

The invention relates generally to demand prediction systems and programs and, more particularly, to a demand prediction system configured to predict an amount of electric power that is demanded in future, and a program for causing a computer to function as the demand prediction system.

### BACKGROUND ART

There has been proposed a conventional technique of predicting a prediction value of energy consumption (see e.g., Document 1: JP 2011-232903 A). The technique in Document 1 is to store an actual measurement value of energy consumption corresponding to a weather condition in the past, and analyze a behavior pattern of a user in the past based on the actual measurement value of energy consumption, and accordingly predict a prediction value of energy consumption corresponding to the behavior pattern in the future. According to the technique in Document 1, two or more behavior patterns of the user in the future, corresponding to weather information in the future, are predicted based on the analyzed behavior pattern in the past so as to obtain two or more prediction values of energy consumption respectively corresponding to the two or more behavior patterns. The behavior pattern in Document 1 denotes the presence or absence of the user in each time slot.

According to the technique in Document 1, the presence or absence of the user is defined as the behavior pattern and the weather information is associated with the behavior pattern, and it is therefore possible to determine the presence or absence of the user based on the weather information in the future and obtain the prediction value of energy consumption in each case.

It is however considered that, even when the user is at home, the energy consumption varies depending on types of apparatuses to be used, and a type of apparatus to be used also varies depending on time slots, thereby the energy consumption varying. In other words, even when the technique in Document 1 is applied, the energy consumption in a prescribed future period may not be predicted with good accuracy.

### DISCLOSURE OF THE INVENTION

It is an object of the present invention to provide a demand prediction system, which can predict an amount of electric power that is demanded in a future prediction period with good accuracy, and further provide a program for causing a computer to function as this demand prediction system.

A demand prediction system according to an aspect of the present invention includes: a receiver configured to acquire, from a meter, power values respectively consumed through two or more branch circuits branched in a distribution board installed in a facility of a power consumer; a memory configured to store power information that includes a power value per branch circuit, acquired by the receiver, in association with date and time; an extractor configured to extract consumption periods for the two or more branch circuits, during each of which an electric load consumes power by being used once, based on the power information stored in the memory; a model generator configured to generate models based on pieces of the power information in prescribed periods, stored in the memory, respectively, each model including an order in which the consumption periods have occurred, amounts of electric power that have been respectively consumed during the consumption periods, and start time points and duration times, of the consumption periods, the model generator being further configured to calculate a transition probability with which each model generated transits into another model; and a predictor configured to predict, as at least one prediction result, an amount of electric power that is demanded in a prediction period defined as a time period after a prescribed determination time point based on a certain model in past before the prescribed determination time point, of the models, and the transition probability corresponding to the certain model.

In other words, this demand prediction system includes a receiver, a memory, an extractor, a model generator and a predictor. The receiver is configured to acquire, from a meter, power values respectively consumed through N branch circuits (N is two or more integers) branched in a distribution board installed in a facility of a power consumer. The memory is configured to store power information that includes a power value of each of the N branch circuits, acquired by the receiver, in association with date and time. The extractor is configured to extract consumption periods for the N branch circuits, during each of which an electric load consumes power by being used once, based on the power information stored in the memory. The model generator is configured to define, as a model group, a combination of at least one branch circuit having a relationship with respect to an order in which two or more consumption periods therefor extracted by the extractor have occurred, of the N branch circuits, based on a piece of the power information in a prescribed period. The model generator is configured to generate modes so as to respectively correspond to model groups in one-to-one. Each model includes, regarding at least one branch circuit that belongs to a model group corresponding to the each model: the order in which two or more consumption periods therefor have occurred; amounts of electric power that have been respectively consumed during the two or more consumption periods; and start time points and duration times, of the two or more consumption periods. The model generator is further configured to calculate a transition probability with which each model generated transits into another model of the models, and store the models and the transition probabilities in a model memory. The predictor is configured to set a prescribed determination time point as a reference, and collate the power information immediately before the determination time point with the models, and extract from the models a first model that corresponds to the power information immediately before the determination time point. When the first model is extracted, the predictor is configured to extract from the models a second model based on a transition probability with which the first model transits thereinto (such that the transition probability is at maximum for example). The predictor is configured to predict, as at least one prediction result, an amount of electric power that is demanded in a prediction period defined as a time period after the determination time point, based on the selected second model.

A program according to an aspect of the present invention is to cause a computer to function as the demand prediction system described above.

### BRIEF DESCRIPTION OF THE DRAWINGS

FIG. 1 is a block diagram illustrating an embodiment;
FIG. 2 is an explanatory diagram for an operational example of the embodiment;
FIG. 3 is an explanatory diagram for an operational example of the embodiment; and
FIG. 4 is an explanatory diagram for an operational example of the embodiment.

### DESCRIPTION OF EMBODIMENTS

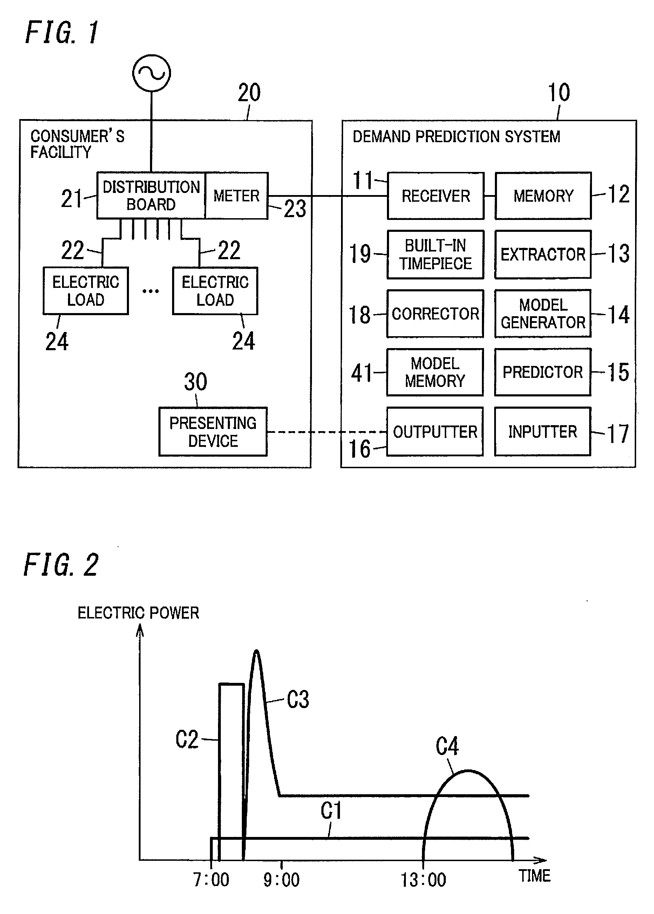

As shown in FIG. 1, a demand prediction system 10 described below includes a receiver 11, a memory 12, an extractor 13, a model generator 14 and a predictor 15. The receiver 11 is configured to acquire, from a meter 23, power values respectively consumed through two or more branch circuits 22 branched in a distribution board 21 installed in a facility 20 of a power consumer. The memory 12 is configured to store power information that includes a power value per branch circuit 22, acquired by the receiver 11, in association with date and time.

The extractor 13 is configured to extract consumption periods for the two or more branch circuits 22, during each of which an electric load 24 consumes power by being used once, based on the power information stored in the memory 12. The model generator 14 is configured to generate models based on pieces of the power information in prescribed periods, stored in the memory 12, respectively. Each model includes: an order in which the consumption periods have occurred; amounts of electric power that have been respectively consumed during the consumption periods; and start time points and duration times, of the consumption periods. The model generator 14 is further configured to calculate a transition probability with which each model generated transits into another model.

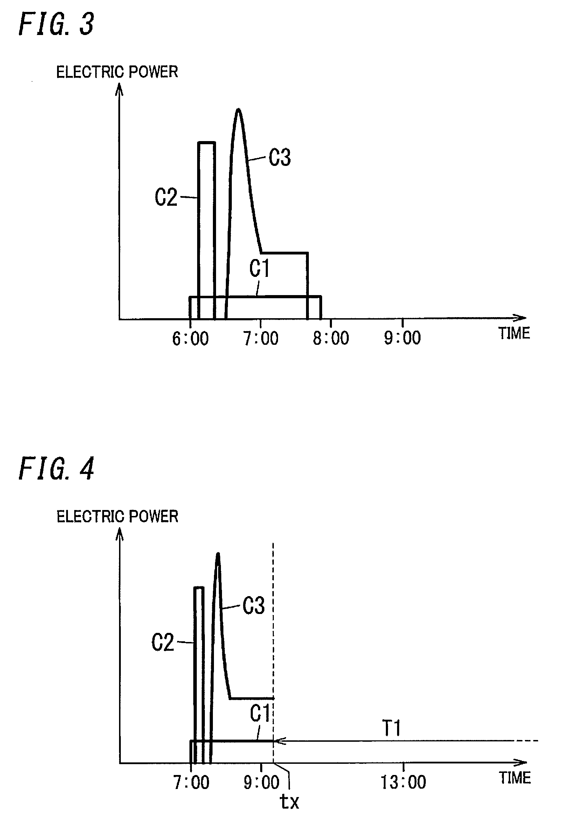

As shown in FIG. 4, the predictor 15 is configured to predict, as at least one prediction result, an amount of electric power that is demanded in a prediction period T1 defined as a time period after a prescribed determination time point tx based on: a certain model in past before the prescribed determination time point tx, of the models; and the transition probability corresponding to the certain model.

Thus, the demand prediction system 10 generates the models, each model including: the order in which electric power has been consumed through the branch circuits 22; the respective amounts of electric power which electric loads 24 have consumed by being used once; and start time points and duration times, of the consumption periods during which the electric loads 24 consume power. Furthermore, the transition probability is calculated between the models. In addition, a model before the determination time point tx is estimated based on the order in which electric power has been consumed in past through the branch circuits 22 before the determination time point tx. A model, which will occur in the prediction period T1, is then predicted based on the estimated model and the transition probability. As a result, according to the above configuration, it is possible to improve the accuracy of predicting the amount of electric power, which will be demanded in the prediction period T1 after the determination time point tx.

The predictor 15 is desirable to be configured to generate two or more prediction results, as the at least one prediction result, and calculate prediction probabilities that respectively correspond to the two or more prediction results.

The demand prediction system 10 is desirable to further include an outputter 16 configured to output the at least one prediction result generated by the predictor 15 to a presenting device 30. The demand prediction system 10 is desirable to further include an inputter 17 and a corrector 18. The inputter 17 is configured to receive an input about an actual amount of electric power consumed in the prediction period T1. The corrector 18 is configured to correct the transition probability between models, calculated by the model generator, 14 based on an error between the amount of electric power as the at least one prediction result predicted by the predictor 15 and the actual amount of electric power received by the inputter 17. Alternatively, the corrector 18 may be configured to correct amounts of electric power of the models, generated by the model generator 14, based on an error between the amount of electric power as the at least one prediction result predicted by the predictor 15 and the actual amount of electric power received by the inputter 17.

The model generator 14 is desirable to be configured to generate the models each of which further includes consumption information on consumption of at least one of gas or tap water consumed in the facility 20 of the power consumer. The gas (or tap water) consumption in the facility 20 means the consumption of gas (or tap water) consumed by apparatuses, etc. in the facility 20. The model generator 14 is desirable to be configured to generate the models each of which further includes information on an external environment of the facility 20 of the power consumer, and adjust the transition probability in accordance with the external environment, and the predictor 15 is desirable to be configured to generate the at least one prediction result in consideration of the external environment in the prediction period T1.

The model generator 14 is desirable to be configured to: when the extractor 13 extracts the consumption periods for the two or more branch circuits 22, define as a model group a combination of at least one branch circuit 22 having a relationship with respect to an order in which two or more consumption periods therefor have occurred, of the two or more branch circuits 22. In this case, the model generator 14 is configured to generate a model regarding the at least one branch circuit 22 that belongs to the model group, the model regarding the at least one branch circuit further including: the order in which the two or more consumption periods have occurred; amounts of electric power that have been respectively consumed during the two or more consumption periods; and start time points and duration times, of the two or more consumption periods.

The demand prediction system 10 includes, as a main hardware element, a computer that executes a program for realizing the functions described above. That is, this program is to cause a computer to function as the demand prediction system 10 described above. Examples of this type of computer include a personal computer and a portable terminal device such as a smartphone or a tablet terminal device. The computer may be formed to include a processor integrally with a memory, as a microcontroller.

The program may be previously written in a ROM (Read Only Memory), or provided via a telecommunication network such as the Internet, or provided with a computer-readable storage medium.

Hereinafter, the configuration of this embodiment will be described in more detail. As shown in FIG. 1, a facility 20 of a power consumer includes a distribution board 21 for receiving power from a commercial power supply of an electric utility. The distribution board 21 branches the received power into two or more branch circuits 22 that constitute two or more systems so as to distribute the power into two or more electric loads 24 to be used in the facility 20. A meter 23 measures a power value consumed per branch circuit 22. In other words, the meter 23 measures the respective power values consumed through the branch circuits 22. The meter 23 may be disposed in the distribution board 21, or around the distribution board 21.

The branch circuits 22 may correspond to the electric loads 24 in one-to-one or one-to-many. In other words, when electric loads 24 have relatively large power consumption, such as an air-conditioner, an IH (Induction Heating) cooking heater and a microwave oven, branch circuits 22 may correspond to the electric loads 24 in one-to-one. In a case of one-to-many, a branch circuit 22 is often assigned to a place (room) in the facility 20, as a unit.

The meter 23 monitors, with a Rogowski coil or a clamp type current sensor, a current flowing through each branch circuit 22, and calculates, as a power value, an integrated value obtained by integrating the product of the monitored current value and a line voltage value of the each branch circuit 22. In other words, actually, the power value measured by the meter 23 is not instantaneous power but an amount of electric power per prescribed unit time (e.g., it is selected in a range of about 30 seconds to 10 minutes, and more desirably it is set to 30 seconds or 1 minute). Generally the instantaneous power per branch circuit 22 is changed with the lapse of time even within unit time, but, in this embodiment, the amount of integrated power per unit time is used as a power value without considering the change of the instantaneous power within unit time. This power value is regarded to be equivalent to an average power value in unit time (instantaneous power).

The power consumer of the facility 20 generally means a client receiving electric power from an electric utility, and, the facility 20 mentioned here means a space occupied by the client. Examples of the facility 20 include a dwelling house, a dwelling unit of a condominium, and a store of a tenant in a building for rent. However, those are merely examples, and the facility 20 is not limited.

The demand prediction system 10 includes a receiver 11 that acquires the respective power values corresponding to the branch circuits 22, measured by the meter 23. The power values acquired by the receiver 11 from the meter 23 each is associated with date and time, and then stored as power information into a memory 12. The date and time is clocked by a built-in timepiece 19, such as a real-time clock, built in the demand prediction system 10. That is, the power information includes: a power value per unit time; and the date and time when the power value is acquired.

The memory 12 stores the power information for each of the branch circuits 22 branched by the distribution board 21. That is, the memory 12 stores a history of a transition in a power value for each of the branch circuits 22. The memory 12 has a capacity capable of storing the power information that is collected for a period, which is selected from 1 week, 1 month, 6 months, 1 year and 2 years, etc. The longer the period during which the power information is stored in the memory 12 is, the larger the information quantity is, and it is therefore considered that it is possible to generate models with high prediction accuracy. However, collecting the power information over a long period may lead to a delay at the operation start of the demand prediction system, and the models also may change depending on a change in a life style of a user. Accordingly, the models are desirable to be generated based on the power information that is collected for a relatively short period, and to be corrected as needed.

This embodiment is based on that the order in which a user uses electric loads 24 in the facility 20 is expected to have regularity. The concept of the "order" also includes a case where an electric load 24 is used singly, independently from another electric load 24. In other words, the concept includes not only a case where electric loads 24 are used in the order, but also a case where only a single electric load 24 is used.

In short, there is a case where a relationship (or a correlation) is found between plural actions in the life style of the user, and an event that after a certain action the next action occurs successively appears with a relatively high frequency. It is considered that such an event appears depending on the life rhythm, the life habit or the life behavior, etc. of the user in the facility 20. The actions of the user in the facility 20 include many actions of using electric loads 24, and it is accordingly considered that the relationship between actions can be found by monitoring the used states of the electric loads 24.

Based on such the knowledge, in this embodiment, the used state of an individual electric load 24 is estimated based on a change in a power value for each of the branch circuits 22, and the relationship between the used states of the electric loads 24 is further estimated, and the power consumption is accordingly estimated. It is first necessary to extract a consumption period during which each of the electric loads 24 consumes power by being used once in order to find the relationship between the used states of the electric loads 24.

For this reason, an extractor 13 calculates standby power values that respectively correspond to the branch circuits 22 based on the power information stored in the memory 12, and extracts an operation period and a non-operation period of each electric load 24 based on a change in a power value with respect to a standby power value, for each branch circuit 22.

A change in a power value in a prescribed period such as 1 day is used for calculating the standby power value for each branch circuit 22. A history of such a power value is obtained from the power values stored in the memory 12. Specifically, a comparison value may be compared with a power value while being changed to gradually reduce, and the minimum value of the comparison value may be used as a standby power value, when meeting a condition that a duration time, during which the power value is less than the comparison value, is equal to or more than a prescribed reference time. The reference time to be compared with the duration time is determined in accordance with the use frequency and the use time slot of each electric load 24. In other words, the reference time is set in accordance with a time during which an electric load 24 as an object is in a non-operation state.

When the extractor 13 extracts consumption periods for the branch circuits 22, during which the electric loads 24 consumes power, a model generator 14 evaluates a relationship with respect to the order in which the consumption periods have occurred by electric power being consumed through the branch circuits 22. The model generator 14 defines, as a model group, a combination of at least one branch circuit 22 that is determined to have the relationship with respect to the order in which two or more consumption periods therefor have occurred, of the branch circuits 22. The model generator 14 generates models respectively corresponding to model groups. Each model includes, as attributes: the order in which the two or more consumption periods have occurred; amounts of electric power that have been respectively consumed during the two or more consumption periods; start time points and duration times, of the consumption periods. In other words, the model generator 14 generates the model including: the order in which the two or more consumption periods have occurred; the amounts of electric power that have been respectively consumed during the two or more consumption periods; the start time points and the duration times, of the two or more consumption periods, for at least one branch circuit 22 that is determined to have the relationship with respect to the order in which the two or more consumption periods have occurred. The order in which the two or more consumption periods have occurred, mentioned here, means an order in which the two or more consumption periods have started, namely, an order of the start time points of the two or more consumption periods, for the at least one branch circuit 22 that belongs to the model group.

The evaluation of the relationship may be to calculate an occurrence frequency per time slot, regarding the consumption periods during which electric power is consumed through the branch circuits 22, and evaluate the level of the correlation regarding the consumption periods of electric power, when the occurrence frequency is equal to or more than a reference value.

It is now assumed that the respective power values corresponding to the branch circuits 22 are changed with the lapse of time, as shown in FIG. 2. Changes in the power values of the power information accumulated in the memory 12 may be actually further complicated, but, FIG. 2 schematically shows a transition in the power values for convenience of explanation. FIG. 2 shows the power information between about 6:00 and 15:00 on a holiday, in case a user stays at home in the daytime. In FIG. 2, C1, C2, C3 and C4 respectively denote the power values of the branch circuits 22 corresponding to a "living room", a "kitchen room", an "air-conditioner" and a "washing machine", respectively. Note that, such a name of an electric load 24 or a room corresponding to each branch circuit 22 will be used also in the below explanation.

In case the power information obtained in the daytime on the holiday is generally as shown in FIG. 2, a single model group is expected to be formed based on the three branch circuits 22: the living room; the kitchen room; and the air-conditioner. That is, the branch circuit 22 as the washing machine is estimated to form a model group, independently from the other three branch circuits 22. In this case, whether or not to form model group(s) is determined based on the occurrence frequency of each consumption period of electric power, and an evaluation result of a correlation coefficient between the branch circuits 22, etc. In this embodiment, a model group is assumed to be formed based on the three branch circuits 22: the living room; the kitchen room; and the air-conditioner.

When the model group(s) is determined, the model generator 14 generates a model including as attributes: an order in which consumption periods have occurred; amounts of electric power that have been respectively consumed during the consumption periods; start time points and duration times, of the consumption periods, for branch circuits 22 that belong to the model group. In the case of FIG. 2, a model as Table 1 is generated for example.

**[Table 1]**

| | Branch Circuit | Order | Start Time Point | Duration Time [min] | Amount of Electric Power [Wh] |
|---|---|---|---|---|---|
| Model 1 | Living Room | 1st | 7:00 ± σ11 | 120 ± σ21 | 300 ± σ31 |
| | Kitchen Room | 2nd | 7:10 ± σ12 | 20 ± σ22 | 600 ± σ32 |
| | Air-conditioner | 3rd | 7:30 ± σ13 | 90 ± σ23 | 1000 ± σ33 |

In Table 1, σ11 to σ13, σ21 to σ23 and σ31 to σ33 denote allowable errors. That is, the allowable errors σ11 to σ13 each denote the degree of variation of a start time point, and the allowable errors σ21 to σ23 each denote the degree of variation of a duration time, and the allowable errors σ31 to σ33 each denote the degree of variation of an amount of electric power.

If on a weekday, the user may go out in the daytime, and the power information between about 6:00 and 9:00 may result in as FIG. 3, for example, and a model as Table 2 is therefore generated. The allowable errors σ11 to σ13, σ21 to σ23 and σ31 to σ33 in Table 2 are the same as those in the case of the holiday, but, the allowable errors actually change, depending on the power information used for generation of the model.

**[Table 2]**

| | Branch Circuit | Order | Start Time Point | Duration Time [min] | Amount of Electric Power [Wh] |
|---|---|---|---|---|---|
| Model 2 | Living Room | 1st | 6:00 ± σ11 | 90 ± σ21 | 300 ± σ31 |
| | Kitchen Room | 2nd | 6:10 ± σ12 | 20 ± σ22 | 600 ± σ32 |
| | Air-conditioner | 3rd | 6:20 ± σ13 | 60 ± σ23 | 800 ± σ33 |

Similarly, the model generator 14 extracts a model group(s) for the other time slot(s), and generates a model(s) corresponding to the model group(s). Tables 3 and 4 respectively show models on the holiday and the weekday, generated for the branch circuit 22 corresponding to the washing machine.

**[Table 3]**

| | Branch Circuit | Order | Start Time Point | Duration Time [min] | Amount of Electric Power [Wh] |
|---|---|---|---|---|---|
| Model 3 | Washing Machine | 1st | 13:00 ± σ14 | 60 ± σ24 | 400 ± σ34 |

**[Table 4]**

| | Branch Circuit | Order | Start Time Point | Duration Time [min] | Amount of Electric Power [Wh] |
|---|---|---|---|---|---|
| Model 4 | Washing Machine | 1st | 13:00 | 360 | 0 |

Note that, Table 4 shows a model in case no electric power is consumed. This model represents that no electric power is determined to be consumed between 13:00 to 18:00 through the branch circuit 22 corresponding to the washing machine.

The model generator 14 calculates transition probabilities between the models, after generating the models as above. A transition probability mentioned here means a probability with which a model to be noted, of the models, transits into another model of the models, namely, a probability with which another model follows the model to be noted. In other words, when a transition occurs in a power value(s) corresponding to the model to be noted, the transition probability is a probability with which the next transition that occurs in the power value(s) corresponds to each of the models other than the model to be noted. For example, a transition probability between models on a holiday is high, but, a transition probability between a model on a holiday and a model on a weekday is low. Transition probabilities about Models 1 to 4 shown in Tables 1 to 4 are defined as Table 5, for example. Since the simple case is used for convenience of explanation, only four types of models and the transition probabilities between the four types of models are shown in this table. However, more types of models may be actually generated, and the number of combinations in the models may be accordingly increased. Table 5 shows the transition probabilities, with which models listed in the left column transit into models listed in the upper column.

**[Table 5]**

| | Model 3 | Model 4 |
|---|---|---|
| Model 1 | 80% | 20% |
| Model 2 | 10% | 90% |

The models and the transition probabilities generated by the model generator 14 as above are stored in a model memory 41. Whenever the model generator 14 generates new model(s), the new generated model(s) and transition probabilities are stored in the model memory 41. In short, the data (the models and the transition probabilities) in the model memory 41 are regularly updated. In addition, the models and the transition probabilities in the model memory 41 are appropriately corrected as described later. Since the models and the transition probabilities are stored in the model memory 41, it is possible to predict an amount of electric power which will be demanded in the prediction period T1 after the prescribed determination time point tx, as described below.

When the determination time point tx is designated, the predictor 15 determines to which model the transition in the past power value(s) before the determination time point tx corresponds. For example, as shown in FIG. 4, when the determination time point tx is after 9:00 and the power information before the determination time point tx is known, the power information before the determination time point tx is collated with the models so as to determine to which model it corresponds. In the case of the illustrated example, it can be seen that it corresponds to Model 1, of Models 1 to 4 described above. In case it corresponds to both of Models 1 and 2, a degree of similarity thereof is evaluated and a model with a higher degree of similarity is selected. The degree of similarity may be evaluated based on a distance relating to a start time point (e.g., the square root of the square sum of a difference), etc.

When the model corresponding to the power information just before the determination time point tx is extracted, the predictor 15 calculates transition probabilities corresponding to the model, and predicts that an event corresponding to a model with the highest transition probability will occur after the determination time point tx. When explained using the example of FIG. 4, it is determined that the power information before the determination time point tx corresponds to Model 1, and then Models 3 and 4 are extracted, as a model representing an event that will occur after Model 1. In this case, a transition probability with which Model 1 transits into Model 3 is higher than that with which Model 1 transits into Model 4, and Model 3 is therefore selected.

That is, in case it is determined that a model corresponding to the power information just before the determination time point tx is Model 1, the predictor 15 predicts that Model 3 will occur after the determination time point tx with high probability. Accordingly, an amount of electric power, which is predicted to be demanded in the prediction period T1 (e.g., a period until an end time point of 1 day) defined as a time period after the determination time point tx, includes an amount of electric power of Model 3.

In case power saving is requested by an electric utility that supplies electric power (i.e., Demand Response), the prediction period T1 may be set before an end time point of a time period during which the power saving is requested. Alternatively, the prediction period T1 may be appropriately set by a user regardless of the power saving. In case two or more models are predicted to occur in the prediction period T1, an amount of electric power, which is predicted to be demanded in the prediction period T1 after the determination time point tx, is obtained by summing amounts of electric power of the predicted models.

In the example of FIG. 4, it is determined that the power information just before the determination time point tx corresponds to Model 1, but Model 1 is not yet finished at the determination time point tx. For this reason, it is desirable to sum amounts of electric power in the remaining time in the model. However, as the request of power saving, in case an object period for the power saving is started some time after the determination time point tx, when an amount of electric power to be demanded in the object period is predicted, it may predict an amount of electric power which will be demanded after the model (not yet finished at the determination time point tx) is finished. In short, in the example of FIG. 4, the predictor 15 may determine only an amount of electric power, which will be consumed in Model 3 after Model 1 is finished, as an amount of electric power that is predicted to be demanded.

Through the operation described above, the predictor 15 obtains only one prediction result (an amount of electric power that is predicted to be demanded in the prediction period T1). The predictor 15 may be configured to generate two or more prediction results, and calculate two or more transition probabilities about the two or more prediction results, respectively.

For example in case the transition probabilities of the models are set as Table 5, the predictor 15 generates: a prediction result including an amount of electric power of Model 3; and a prediction result including an amount of electric power of Model 4, with respect to Model 1 estimated based on the power information just before the determination time point tx. A prediction probability with which Model 3 follows Model 1 is defined as a transition probability of 80%, and a prediction probability with which Model 4 follows Model 1 is defined as a transition probability of 20%. In this case, a prediction probability about the prediction result including the amount of electric power of Model 3 is 80%, and a prediction probability about the prediction result including the amount of electric power of Model 4 is 20%.

Of course, there is also a case where a combination of two or more models occurs, as a model that may occur in the prediction period T1 after the determination time point tx, with respect to a model estimated based on the power information just before the determination time point tx. In this case, the predictor 15 calculates a prediction probability for each combination, using the transition probabilities of the two or more models.

As described above, prediction probabilities, respectively corresponding to the two or more prediction results obtained based on the two or more models that may occur in the prediction period T1, are determined, and then the predictor 15 sets the prediction probabilities to weight coefficients, and calculates a weighted average by weighting amounts of electric power of the two or more models, using the weight coefficients. The predictor 15 is desirable to use the weighted average as an amount of electric power that is predicted to be demanded. Instead of using the weighted average, regarding a combination of models with the highest prediction probability, the sum of amounts of electric power of the models may be used as an amount of electric power that is predicted to be demanded in the prediction period T1.

The amount of electric power in the prediction period T1, predicted by the predictor 15 as described above, is output via an outputter 16, and presented by a presenting device 30. A user therefore can confirm the content presented by the presenting device 30. In addition, since the predictor 15 predicts the amount of electric power that is demanded in the prediction period T1, it is possible to form a system that assists the user or gives the user advice, using this function, regarding the consumption of power in the consumer's facility 20.

Incidentally, a transition probability between models is automatically set based on the power information stored in the memory 12, however, the transition probability may change depending on conditions. The demand prediction system 10 is therefore desirable to include: an inputter 17 configured to receive an input about a condition for setting the transition probability; and a corrector 18 configured to correct the transition probability.

The inputter 17 receives an input about an actual amount of electric power consumed in the prediction period T1, for example. That is, by giving the actual amount of electric power after end of the prediction period T1 via the inputter 17, it is possible to compare it with an amount of electric power to be demanded, which is predicted at the determination time point tx before start of the prediction period T1. The corrector 18, when an error between the actual amount of electric power and the predicted amount of electric power (the amount as the prediction result) is within an assumed range, does not correct the transition probability, and, when the error exceeds the assumed range, corrects it.

The corrector 18 is desirable not to determine whether or not to correct the transition probability based on a prediction result obtained by predicting once, but to determine whether or not to correct it based on prediction results obtained by predicting two or more times. In case the amount of electric power is calculated by the weighted average as described above, it is possible to adjust the predicted amount of electric power so as to be closer to the actual amount of electric power, by correcting the transition probability based on the prediction results obtained by predicting two or more times. Instead of correcting the transition probability, the corrector 18 may be configured to correct amounts of electric power of the models.

An operation device for inputting the condition to the inputter 17 and a display device as the presenting device 30 may be provided as a dedicated operation display device formed only for the demand prediction system 10. The operation display device includes: a display device that is a flat panel display (such as a liquid crystal display); and an operation device (such as a touch panel or a push button switch), formed integrally with the display device. Alternatively, the demand prediction system 10 may have an interface (not shown) for communicating with a terminal device that serves as the operation device and the display device. Examples of this type of terminal device include a personal computer, a smartphone and a tablet terminal device.

In the configuration example described above, the model generator 14 generates the models based on only the power information, but may generate the models each of which further includes consumption information on consumption of at least one of gas or tap water consumed in the power consumer's facility 20. In this case, it means that each model includes at least one of the gas consumption or the tap water consumption, in addition to the amount of electric power.

Thus, it is possible to estimate a model, including the consumption information that is a transition in the gas consumption or the tap water consumption, just before the determination time point tx, and predict a model as an event that will occur in the prediction period T1 after the determination time point tx. In other words, the information quantity for determining the model just before the determination time point tx is increased, and it is therefore possible to improve the accuracy of predicting the model as the event that will occur in the prediction period T1. In addition, since each model includes the information on consumption of at least one of gas or tap water, it is possible to also predict at least one of gas or tap water that will be demanded in the prediction period T1.

The model generator 14 may be configured to generate the models each of which further includes information on an external environment of the power consumer's facility 20. In this case, the transition probability is desirable to be adjusted in accordance with the external environment in the transiting model. That is, the model generator 14 calculates the transition probability in accordance with the external environment. Examples of the external environment include weather (such as the fine, the cloudy or the rainy weather), outside air temperature, outside humidity and the like. Such the external environment is desirable to be acquired via a telecommunication network such as the Internet. In other words, the demand prediction system 10 is desirable to include a communicator (not shown) capable of performing communication via the telecommunication network.

In case each model includes information on the external environment, the predictor 15 generates a prediction result in consideration of the external environment in the prediction period T1. For example, it is assumed that the prediction result, generated by the predictor 15 based on the transition probability, represents that a washing machine will be used in the prediction period T1. In this case, the predictor 15, when the weather as the external environment is fine, may use an amount of electric power relating to only washing as the prediction result, and, when the weather is rainy, may use the sum of amounts of electric power relating to washing and drying as the prediction result. The predictor 15 may adjust an amount of electric power that is predicted to be consumed by an air-conditioner, in accordance with the outside air temperature as the external environment to generate the prediction result. Thus, by considering the external environment, it is possible to improve prediction accuracy with which the predictor 15 predicts an amount of electric power that is demanded in the prediction period T1.

The demand prediction system 10 can be disposed at each facility 20. In case a controller of HEMS (Home Energy Management System) is installed in a facility 20, a power value measured by the meter 23 may be acquired from the controller of HEMS via a telecommunication network such as the Internet. In this configuration, the demand prediction system 10 is provided in a server that performs communication via the telecommunication network. In other words, the server collects power values respectively consumed through branch circuits from two or more facilities 20 of power consumers, and generates models for each facility 20. In case the server includes the demand prediction system 10 as above, when high similarity is found between models of facilities 20, the facilities 20 with the high similarity may be defined as a single group. In this case, the same model(s) can be applied to the facilities 20 defined as the single group.

An object of the above-mentioned configuration example is to predict an amount of electric power that will be demanded in the prediction period T1 after the determination time point tx. Thus, by predicting the amount of electric power that will be demanded in future, the demand prediction system 10 of this embodiment may be also utilized as follows.

When focused on e.g., an air-conditioner, if a time slot in which the air-conditioner is planned to be used is included in the object period for the power saving, the demand prediction system can provide a message for promoting a user to go out, or a message for promoting the user to adjust a room temperature beforehand. In case a photovoltaic power generation system and an electric storage device are installed at a facility 20 of a power consumer, the demand prediction system can also advise the user to refrain from selling electric power generated by the photovoltaic power generation system before start of the object period for the power saving, and store the generated electric power in the electric storage device.

When further focused on e.g., a washing machine, if a time slot in which the washing machine is planned to be used is included in the object period for the power saving, the demand prediction system can advise the user to use the washing machine before or after the object period. Similarly, if weather in the time slot in which the washing machine is planned to be used is predicted to be rainy, the demand prediction system can advise the user to shift the time slot to another time slot. Note that, the demand prediction system may additionally have a function to determine that abnormality may occur with a user in the facility 20, if the washing machine has not been actually used in spite of that the washing machine has been predicted to be used.

Thus, since the demand prediction system 10 can predict an amount of electric power that will be demanded in the prediction period T1 appropriately set, the predicted amount of electric power can be variously applicable. Note that, the embodiment described above is one example according to the present invention. Accordingly, the present invention is not limited to the embodiment, but numerous modifications and variations can be made in accordance with the design and the like without departing from the technical ideas according to the present invention, even other than the embodiment.

## Claims

1. A demand prediction system, comprising:
a receiver configured to acquire, from a meter, power values respectively consumed through two or more branch circuits branched in a distribution board installed in a facility of a power consumer;
a memory configured to store power information that includes a power value per branch circuit, acquired by the receiver, in association with date and time;
an extractor configured to extract consumption periods for the two or more branch circuits, during each of which an electric load consumes power by being used once, based on the power information stored in the memory;
a model generator configured to generate models based on pieces of the power information in prescribed periods, stored in the memory, respectively,
each model including
an order in which the consumption periods have occurred,
amounts of electric power that have been respectively consumed during the consumption periods, and
start time points and duration times, of the consumption periods,
the model generator being further configured to calculate a transition probability with which each model generated transits into another model; and
a predictor configured to predict, as at least one prediction result, an amount of electric power that is demanded in a prediction period defined as a time period after a prescribed determination time point based on
a certain model in past before the prescribed determination time point, of the models, and
the transition probability corresponding to the certain model.

2. The demand prediction system according to claim 1, wherein the predictor is configured to generate two or more prediction results, as the at least one prediction result, and calculate prediction probabilities that respectively correspond to the two or more prediction results.

3. The demand prediction system according to claim 1 or 2, further comprising an outputter configured to output the at least one prediction result generated by the predictor to a presenting device.

4. The demand prediction system according to any one of claims 1 to 3, further comprising:
an inputter configured to receive an input about an actual amount of electric power consumed in the prediction period; and
a corrector configured to correct the transition probability between models, calculated by the model generator, based on an error between the amount of electric power as the at least one prediction result predicted by the predictor and the actual amount of electric power received by the inputter.

5. The demand prediction system according to any one of claims 1 to 3, further comprising:
an inputter configured to receive an input about an actual amount of electric power consumed in the prediction period; and
a corrector configured to correct amounts of electric power of the models, generated by the model generator, based on an error between the amount of electric power as the at least one prediction result predicted by the predictor and the actual amount of electric power received by the inputter.

6. The demand prediction system according to any one of claims 1 to 5, wherein the model generator is configured to generate the models each of which further includes consumption information on consumption of at least one of gas or tap water consumed in the facility of the power consumer.

7. The demand prediction system according to any one of claims 1 to 6, wherein:
the model generator is configured to generate the models each of which further includes information on an external environment of the facility of the power consumer, and adjust the transition probability in accordance with the external environment; and
the predictor is configured to generate the at least one prediction result in consideration of the external environment in the prediction period.

8. The demand prediction system according to any one of claims 1 to 7, wherein the model generator is configured to:
when the extractor extracts the consumption periods for the two or more branch circuits, define as a model group a combination of at least one branch circuit having a relationship with respect to an order in which two or more consumption periods therefor have occurred, of the two or more branch circuits; and
generate a model regarding the at least one branch circuit that belongs to the model group, the model regarding the at least one branch circuit further including:
the order in which the two or more consumption periods have occurred;
amounts of electric power that have been respectively consumed during the two or more consumption periods, and
start time points and duration times, of the two or more consumption periods.

9. A program for causing a computer to function as the demand prediction system according to any one of claims 1 to 8.
